# EUROPEAN PATENT SPECIFICATION

(11) **EP 1 185 177 B1**
(45) Date of publication and mention of the grant of the patent: **16.03.2005**
(21) Application number: 00936031.4
(22) Date of filing: 16.05.2000
(51) Int. Cl.: A01N 57/00

(54) **AN IMPROVED PROCESS FOR COMBATTING PARASITOSIS IN BEE COLONIES**
VERBESSERTES VERFAHREN ZUR BEKÄMPFUNG VON PARASITOSEN IN BIENENSTÖCKEN
PROCEDE PERFECTIONNE DE LUTTE CONTRE LES PARASITOSES DANS LES COLONIES D'ABEILLES

(30) Priority: 26.05.1999 US 320027
(43) Date of publication of application: 13.03.2002
(73) Proprietor: Bayer Corporation, Pittsburgh, PA 15205 (US); Bayer Aktiengesellschaft, 51368 Leverkusen (DE)
(72) Inventor: ARTHER, Robert, G., Leawood, KS 66206 (US); GRISSOM, James, V., Lawson, MO 64062 (US); PENNINGTON, Robert, G., Rayville, MO 64084 (US); HEINE, Josef, D-42799 Leichlingen (DE); KOENIGER, Nikolaus, D-61440 Oberusel (DE)
(74) Representative: Krieg, Robert Alexander
(86) International application number: PCT/US2000/013599
(87) International publication number: WO 2000/072683

(56) References cited:
- EP-A- 0 279 219
- US-A- 4 646 377
- US-A- 5 018 481
- US-A- 5 230 894

## Description

Field of the Invention: The present invention relates to a process for combating parasitosis caused by parasitic mites or predacious insects in bee colonies by effectively disposing coumaphos for the bees on their brood to make contact therewith. More specifically, the invention relates to disposing the coumaphos through the use of an effective device.

Brief Description of the Prior Art: It is known in the art that various pesticidal agents can be used to combat predacious mites, Varroa jacobsoni. However, the use of these agents have been limited by the efficacy of the agents as to their nature or method of use. Illustratively, U.S. Patent 4,646,377 discloses a process for combating Varroa jacobsoni on bees comprising applying to the bees or their habitat an effective amount of coumaphos in a liquid mixture. U.S. Patent 4,965,287 discloses a method of controlling parasitosis in bees by applying to the bees, their food or their habitat a parasiticide which is selectively active against such parasitoses but not against said bees, the improvement wherein such parasiticide is a synthetic pyrethroid. Other known methods involve treating the bee colony with smoke or dust of chemical compounds. U.S. Patent 5,018,481 discloses an insect control device for attachment to livestock comprising a molded article formed from a mixture of coumaphos, polyvinyl chloride and a plasticizer. While the patent disclosed that coumaphos is a pesticide which is effective against mites and insects, it does not disclose the use of the device for combating parasites on bees. EP-A-0 279 219 discloses compositions for combating protozoa in insects, which compositions contain as main ingredient a triazinetrione. US-A 5 230 894 discloses acaricidal compositions suitable for use against varroatosis in bees and device containing same. US-A 5 018 481 discloses an insect control device for livestock containing coumaphos. US 4 646 377 discloses a process for coma bating varoatosis in bees using coumaphos in the form of an aqueous suspension or emulsion, The present invention provides for the new use of a device containing coumaphos for effectively treating parasitosis in bee colonies.

In accordance with the foregoing, the present invention encompasses the use of coumaphos in combination with a plastic material, selected from the group consisting of polyvinyl chloride, polyvinylidene chloride, and polyurethane, for the preparation of means for combating parasitosis in bees by contacting the bees or their brood or habitat with an amount effective therefor of coumaphos, wherein the plastic material is impregnated with coumaphos by molding and wherein the coumaphos is present in an amount of 1 to 20 percent based on the total weight of the means.

In a presently preferred embodiment of the invention, the process encompasses proximately positioning a molded article formed from a mixture of coumaphos and a plastic material around or within a bee hive to effectively release coumaphos on the bees upon contact with the molded article. It has been found that by this process, one can advantageously combat parasitic mites or predacious insects without harming bees or upsetting the bee colony.

The invention is defined more fully hereunder using the following defined terms. By the term "contacting" is meant bees have physical contact with Coumaphos strips when the strips are placed in proximity to the entrance of the hive so that the bees walk or crawl across the strips as they enter or exit. Alternatively, the strips can be suspended. within the frames of the hive where the bees or their brood contact the strips during their daily activity within the hive. The physical contact of bees with the strips causes a small amount of coumaphos to be deposited on the bee.

Coumaphos is further dispersed by bee-to-bee contact during their social interaction. The amount of coumaphos deposited from exposure of bees to the strips is sufficient to remove the infesting parasites without harming the bees.

By the term "an amount effective" is meant the device (strip) is formulated with the correct proportion of coumaphos in relation to the other matrix components to release a sufficient quantity of pesticide to remove and control the infesting pests without harming the bee. The selection and ratio of components is a distinct feature of the invention since coumaphos itself is toxic to bees.

By the term "combination" is meant the device is formulated with a combination of pesticide (coumaphos), polymer polyvinyl chloride (PVC or similar material), plasticizer (usually employed), pigment, and stabilizers resulting in a stable matrix that releases sufficient coumaphos over a desired period. The desired period can be from about a day to eight weeks and preferably from about three to eight weeks.

By the term "compatible" is meant the formulation, design, and placement of the device within the colony does not harm the bees or disturb the social organization of the bees within the colony.

The optimal dimensions of the strips are 8.75 x 1.00 x 0.12 inches and weight 8-15 grams although larger or smaller strips may provide equivalent results. A fold-over tab with a living hinge" may be configured at one end of the strip to form a "T" configuration that will facilitate suspending the strips within the frames of the bee colony.

The surface of the strip may be smooth or alternatively a hexagonal "honeycomb" pattern may be molded into the surface. The honeycomb pattern increases the overall surface area of the strip for more efficient release of coumaphos. In addition, the honeycomb pattern is perceived by the bees as a natural constituent of the hive and reduces the possibility of disturbing the social activity of the bees within the hive.

### DETAILED DESCRIPTION OF THE INVENTION

As set forth above, the present invention relates to an improved process for combating parasitosis, typically caused by parasitic mites such as Varroa jacobsoni, Varroa underwoodi, Acarapis woodi or predacious insects such as Aethina tumida. The process comprises contacting the bees, their food or habitat with an amount effective therefor of coumaphos (O,O-diethyl-O-(3-chloro-4-methyl-coumarinyl)thionophosphate) which is in combination with a plastic material.

Coumaphos is typically a solid organophosphorus compound that can be combined with a compatible material such as plastic in an amount sufficient to maintain physical stability and integrity of the strip. The resulting combination, upon contact with infesting pests, releases sufficient coumaphos to control the pest for a period of a day to 8 weeks, and preferably up to about 3-8 weeks. Typically, an amount of 1 to 20 and preferably 2.5 to 10 percent of coumaphos based on the total weight of the combination can be used. The compatible material can be selected from the group consisting of polyvinyl chloride (PVC), polyurethane, polyvinylidene chloride and vinyl compounds. An amount of 40 to 60 and preferably 45 to 55 percent of the compatible material based on the total weight of the combination can be used. Usually employed with the compatible material is a plasticizer selected from the group consisting of triethyl citrate, acetyl tributyl citrate, citrate esters, dioctyl phthalate and diethylhexyl phthalate. Amounts of 5 to 40 percent and preferably 25 to 35 percent of the plasticizer based on the total weight of the combination can be employed. Other components can be incorporated in the combination. For example, dyes, pigments, lubricants, flakes, fillers, antioxidants and ultraviolet stabilizers can optionally be incorporated.

The components can be formed into the combination by any convenient method including impregnating the material with coumaphos by molding and preferably by injection molding. Preferably the coumaphos is incorporated by embedding it in the plastic material.

In the practice of the invention, the bee colony can be treated by proximately disposing the combination around or within the structure or habitat, or entrance for the colony by any convenient means. Illustratively, the combination can be disposed by suspending the strips between the brood frames.

The proximity to the structure or habitat is such that will result in an effective transfer of coumaphos. By an effective transfer is meant deposit of coumaphos from the strip to the bee in sufficient quantity to remove and control the pests without harming the bee. Based on the description provided herein, it will be within the purview of the skilled artisan to ascertain the proximity of the strips to the colony.

Generally the period of treatment will depend on the period of development of the parasites and of the bees. Treatment can be carried out such that all development stages of the parasite on the adult bees or on the bee brood have exposure to treatment. The treatment can be carried out twice per year at intervals of about 1 to 56 days each.

The invention is further described by the following illustrative but non-limiting examples.

### EXAMPLES

### Example 1

Six bee colonies infested with parasitic mites, Varroa jacobsoni were divided into 3 groups. Two colonies were treated with 10% Coumaphos strips by placing the strips at the entrance to the hive. Two colonies each received "1 x 10%" Coumaphos strips placed between the brood combs. Two colonies remained untreated. The Coumaphos strips remained in the colonies for 30 days. Dead mites from each colony were collected and counted during this period. At the end of this period the bees from each hive were transferred to artificial swarm boxes and treated with a product to remove any remaining mites. The total mite population in each colony was determined by adding the number of mites removed during Coumaphos treatment with the number of mites remaining after 30 days. The percent mite reduction following coumaphos treatment was then determined.

| Treatment | Percent Varroa Reduction |
|---|---|
| 10% coumaphos strips at hive entrance | 94.2 |
| 10% coumaphos strips between brood combs | 99.4 |
| Untreated Control | +19.5 |

The Coumaphos strips placed at either the entrance of the colony or within the brood combs provided effective control of varroa mites. No unusual bee mortality was observed following treatment with Coumaphos strips.

### Example 2

Thirty bee colonies infested with Varroa jacobsoni were randomized into 3 treatment groups. Each group received 10% coumaphos strips either placed in the brood nest or at the hive entrance. A fourth group of hives remained untreated. Sticky boards were placed beneath each hive to collect dead varroa. The strips were removed 46 days after treatment. The hives remained untreated for 2 days. One Fluvalinate (pyrethroid) strip was then placed in the brood nest of each colony for 24 hours to remove any remaining mites. The total number of varroa in each colony was determined by adding the number of varroa removed after coumaphos strip treatment with the number of varroa collected after Fluvalinate treatment. The percent change of varroa following coumaphos treatment was then calculated.

| Treatment | Method of Application | Percent Varroa Reduction |
|---|---|---|
| 10% Coumaphos/1-strip | Brood Nest | 91 |
| 10% Coumaphos/2-strips | Brood Nest | 97 |
| 10% Coumaphos/2-strips | Bottom Board | 91 |
| Control | Untreated | 71 |

Varroa were reduced ≥91% for the treatment groups receiving 10% Coumaphos strips. The highest reduction (97%) was observed with 2 x 10% Coumaphos strips placed in the brood nest.

No unusual adult bee mortality was observed following treatment with the Coumaphos strips.

### Example 3

A controlled efficacy study was conducted in Clear Lake, South Dakota to evaluate the efficacy of five different products for control of Varroa jacobsoni in honeybee colonies. The products tested included 10% Fluvalinate strips, Amitraz strips, Permethrin strips, 5.0% Coumaphos strips, and Formic acid gel packs.

One hundred and twenty bee colonies with varroa infestations were randomized into 6 treatment groups of 20. Five groups received treatment with the test products and the sixth group served as untreated controls. All strips formulations were applied as 2 strips in the brood nest of each colony. Formic acid gel packs were placed under the top cover of the brood nest. Treatments were applied on Day 1. Sticky boards were placed beneath each hive to collect dead varroa.

All treatments were removed 30 days post-treatment. On day 31 an amitraz formulation was placed in each colony to kill remaining varroa. The total number of varroa present in each colony was determined by adding the number of dead varroa collected after treatment with the test products with the number of dead varroa collected after amitraz treatment. The percent change of varroa following experimental treatment was then calculated.

| Treatment | Percent Varroa Reduction |
|---|---|
| 10 % Fluvalinate strips | 64 |
| Amitraz strips | 94 |
| Permethrin strips | 67 |
| 5 % Coumaphos strips | 92 |
| Formic acid gel pack | 26 |

The Amitraz and 5.0 % coumaphos strips provided the greatest reduction in varroa (94 and 92 %, respectively). The failure of Fluvalinate and Permethrin strips to control varroa indicated the mites were resistant to pyrethroid insecticides.

No usual bee mortality was observed following treatment with the Coumaphos strips.

### Example 4

A controlled efficacy study was conducted near Lincoln, Nebraska to evaluate the efficacy of 3 concentrations of Coumaphos strips for control of Varroa jacobsoni in honeybee colonies.

Forty bee colonies confirmed to have varroa infestations were randomized into 4 treatment groups (10 colonies/treatment). Three groups received treatment with one of 3 different Coumaphos strip concentrations (2 strips/colony) and the 4^{th} group served as untreated controls. The strips were suspended between the frames of the brood box for maximum contact with the cluster of bees.

Sticky boards were placed beneath all colonies prior to treatment (Day 0) to collect dead mites. Initial mite drop was determined on Day 1. The Coumaphos strips remained in the colonies for 37 days. The Coumaphos strips were then removed and two (10% Fluvalinate) strips and new sticky boards were placed in all 40 colonies for two days to kill and collect any remaining mites. The total number of varroa present in each colony was determined by adding the number of dead varroa collected after treatment with Coumaphos strips with the number of dead varroa collected after treatment with Fluvalinate. The percent varroa reduction following coumaphos treatment was then calculated.

| Treatment | % Varroa reduction |
|---|---|
| Control | 2 |
| 2.5 % Coumaphos strips | 2.5 |
| 5.0 % Coumaphos strips | 87 |
| 10.0 % Coumaphos strips | 97 |

The mite count data were transformed using log 10 transformation because the variation of mite counts between colonies was large. Regression analyses were conducted on the initial mite drop and change in mite drop.

The 5% and 10% coumaphos strips provided effective varroa control.

No usual bee mortality or injury to the colonies were observed following treatment with Coumaphos strips.

### Example 5

A controlled efficacy study was conducted near St. Paul, Minnesota to evaluate the efficacy of 3 concentrations of Coumaphos strips for control of Varroa jacobsoni in honeybee colonies.

Thirty-eight bee colonies confirmed to have varroa infestations were randomized into 4 treatment groups (9 or 10 colonies/treatment). Three groups received treatment with one of the 3 different Coumaphos strip concentrations (2 strips/colony) and the fourth group served as untreated controls. The strips were suspended between the frames of the lower brood box for maximum contact with the cluster of bees.

Sticky boards were placed beneath all colonies prior to treatment (Day 0) to collect dead mites. Initial mite drop was determined on Day 1. New sticky boards were placed beneath each hive on Day 21 to collect and count dead mites on Day 22. The Coumaphos strips remained in the colonies through Day 46 and were then removed. On Day 49 two 10% Fluvalinate strips and new sticky boards were placed in all colonies for one day to remove and collect any remaining mites. The total number of varroa present in each colony was determined by adding the number of dead varroa collected after treatment with Coumaphos strips with the number of dead varroa collected after 10% Fluvalinate treatment. The percent varroa reduction following coumaphos treatment was then calculated.

| Treatment | % Varroa Reduction |
|---|---|
| Control | 11.5 |
| 2.5% Coumaphos strips | 17.7 |
| 5.0% Coumaphos strips | 98.6 |
| 10.0% Coumaphos strips | 96.9 |

A one-way ANOVA using log 10 transformed data, followed by post-hoc mean separation (Tukey's test) was used to compare the percent efficacy among treatment groups. The 5 and 10% Coumaphos strips provided highly significant varroa reduction (P=0.00). Differences in varroa reduction between 5 and 10% Coumaphos strips were not significantly different.

No unusual bee mortality or injury to the colonies was observed following treatment with Coumaphos strips.

## Claims

1. Use of coumaphos in combination with a plastic material, selected from the group consisting of polyvinyl chloride, polyvinylidene chloride, and polyurethane, for the preparation of means for combating parasitosis in bees by contacting the bees or their brood or habitat with an amount effective therefor of coumaphos, wherein the plastic material is impregnated with coumaphos by molding and wherein the coumaphos is present in an amount of 1 to 20 percent based on the total weight of the means.

2. Use according to claim 1 wherein the plastic material is polyvinyl chloride.

3. Use according to claims 1 or 2 wherein the means is a strip.

## Patentansprüche

1. Verwendung von Coumaphos in Kombination mit einem Kunststoffmaterial, ausgewählt aus der Gruppe, bestehend aus Polyvinylchlorid, Polyvinylidenchlorid und aus Polyurethan, zur Herstellung von Mitteln zur Bekämpfung von Parasitosen in Bienen, wobei die Bienen oder deren Brut oder Habitat in Kontakt mit einer dafür wirkungsvollen Menge von Coumaphos gebracht werden, worin das Kunststoffmaterial mit Coumaphos beim Formen imprägniert wurde und das Coumaphos in einer Menge von 1 bis 20 %, bezogen auf das Gesamtgewicht der Mittel, vorhanden ist.

2. Verwendung gemäß Anspruch 1, worin das Kunststoffmaterial Polyvinylchlorid ist.

3. Verwendung gemäß Anspruch 1 oder 2, worin das Mittel ein Streifen ist.

## Revendications

1. Utilisation de coumaphos en association avec une matière plastique, choisie dans le groupe consistant en poly(chlorure de vinyle), poly(chlorure de vinylidène) et polyuréthanne, pour la préparation d'un moyen destiné à combattre une parasitose chez les abeilles, en mettant en contact les abeilles ou leur couvain ou habitat avec une quantité efficace à cette fin de coumaphos, dans laquelle la matière plastique est imprégnée de coumaphos par moulage et dans laquelle le coumaphos est présent en une quantité de 1 à 20 % sur la base du poids total de ce moyen.

2. Utilisation suivant la revendication 1, dans laquelle la matière plastique est le poly(chlorure de vinyle).

3. Utilisation suivant la revendication 1 ou 2, dans lequel le moyen est une bande.
